# EUROPEAN PATENT SPECIFICATION

(11) **EP 1 114 350 B1**
(45) Date of publication and mention of the grant of the patent: **02.05.2002**
(21) Application number: 99959846.9
(22) Date of filing: 16.12.1999
(51) Int. Cl.: G02C 1/02

(54) **RIMLESS SPECTACLES WITH BLANKED METALLIC PARTS**
RANDLOSE BRILLE MIT GESTANZTEN METALLTEILEN
LUNETTES SANS MONTURE AVEC PIECES METALLIQUES ESTAMPEES

(30) Priority: 14.09.1999 JP 26102599
(43) Date of publication of application: 11.07.2001
(73) Proprietor: Mitani Optical Corporation, Fukui-shi, Fukui 910-2148 (JP)
(72) Inventor: Inaida, Syuichi, Mitani Optical Corporation, Fukui-shi, Fukui 910-2148 (JP)
(74) Representative: Pearce, Anthony Richmond
(86) International application number: JP9907064
(87) International publication number: WO0120388

(56) References cited:
- EP-A- 0 661 576
- WO-A-92/08158
- WO-A-98/40779
- US-A- 1 387 898
- US-A- 4 502 765

## Description

### TECHNICAL FIELD

This invention relates to rimless spectacles with bent metallic parts in use and the same parts, in more details, pertaining to such spectacles that is easy to be assembled with such structural parts inexpensively prepared by such a simple plating work on a thin metallic plate as blanking, nonetheless, which spectacles is light in weight and sophisticated in design.

### BACKGROUND ART

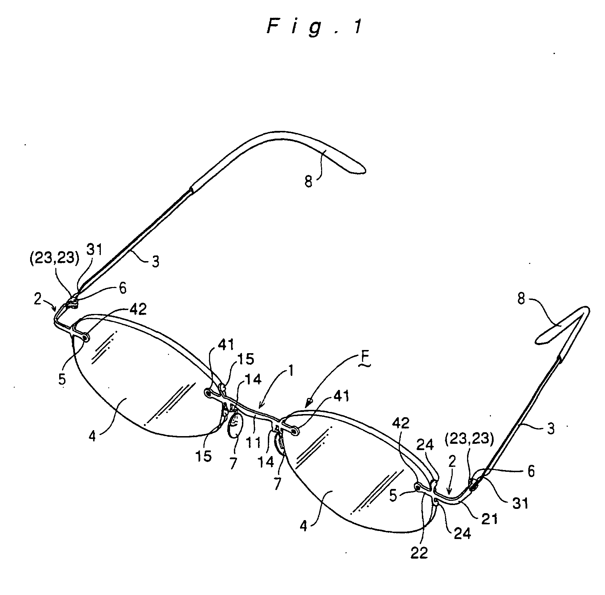

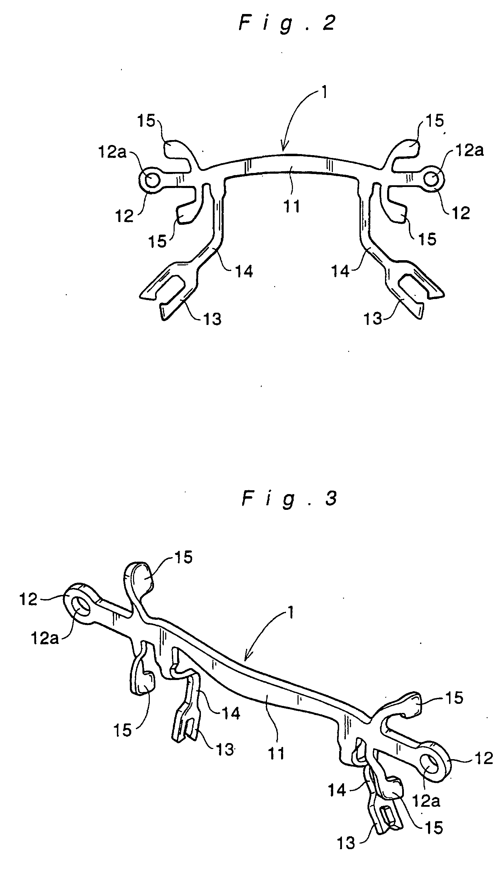

Conventionally, a pair of spectacles is well known as rimless spectacles wherein a front frame is provided by clamping a pair of right-and-left lenses in juxtaposition onto the lens straps provided on the respective ends of the bridge and the outer circumferential sides of the respective lenses are held onto the lens straps of the bracket endpieces while the temples are foldably hinged onto the distal end portions of said endpieces. The prior references of such spectacles are made to Figures 10 and 11 of the Approved Japanese Patent Application Advertisement No.1-60128, Figure 1 of the Japanese Utility Model Application Laid-open No.62-35324, Figures 1 and 3 of the Japanese Patent Application Laid-open No.8-136866 and to the definition of the relevant term listed at an item No. 105 of JIS (Japanese Industrial Standard) CLASSIFICATION CODE No.B7280 and its accompanying drawing No. 5.

Such type of spectacles is wide in view and provides clear vision to the wearers, as it does not require the rims enclosing the right-and-left lenses. Moreover, as it is assembled with small metallic parts besides the lenses, its streamlined and sophisticated design is popular among the younger wearers. Such parts as the bridge, bracket endpieces of the rimless spectacles are required to be strong enough to directly sustain a pair of lenses with engaged thereto and to allow its whole weight to be carried on the temples while high-grade appearance is also sought-after, so that they are normally made of metallic material.

However, the bridge normally requires pad arms to mount nose pads thereon and rim pad portions to support the inner circumferential fringe sides of the lenses, besides lens straps to be provided with the respective ends thereof to sustain the lenses with engaged thereto, so that brazing operation is indispensable to incorporate those structural elements into the bridge, which leads to inefficiency in production and high production cost. This also applies to the bracket endpiece, at the distal end portion of which hinge pieces have to be provided to hinge a temple thereon. Moreover, a rim pad portion has to be provided therewith to support an outer circumferential fringe side of the respective lenses. As such, brazing operation is indispensable for this part too. It leads to inefficiency in production and high cost of production. Recently, although the bridge and bracket endpiece of synthetic resin are integrally formed by injection molding, they look inferior to those in metal, so that it does not suit the taste of especially the fashion-conscious wearers.

Parts of spectacle frames blanked from thin metal plates are known from US 1,387,898.

In view of the inconveniences encountered with such conventional rimless spectacles, this invention is to provide a novel rimless spectacles with such ordinary parts as a bridge and bracket endpieces, the respective structural elements of which are integrally formed of metal by means of such a simple plating process as blanking, so that it dispenses with brazing or soldering steps to prepare such elements and to provide bent metallic parts to be used for assembling such spectacles.

Further, this invention is to provide rimless spectacles which keeps its metallic strength and high-grade appearance intact while being light in weight and comfortable to wear and to provide bent metallic parts to be used for assembling such spectacles.

Moreover, this invention is to provide a pair of rimless spectacles which can be efficiently produced and to inexpensively provide a bridge and a bracket endpiece, which are respectively structured as bent metallic parts, to enable such production.

### DISCLOSURE OF THE INVENTION

The means adopted in this invention to solve the above issues is described as follows with reference to the accompanying drawings.

The rimless spectacles embodied in this invention comprises a bridge made of a thin metallic plate, said bridge being integrally provided with at least one first eyelet, thereinafter also referred to as "lens strap" at the respective ends of a bar portion thereof and a pair of pad arms respectively extending from the vicinity of the respective ends of said bar portion and having a pad mounting portion at the tip end portion thereof, wherein said lens straps and pad arms are subjected to bending operation on a case-by-case basis; a bracket endpiece made of a thin metallic plate, a bracket portion of which is provided with at least one second lens strap at its one end while at the other end thereof, a pair of lobes, thereinafter also referred to as "knuckle plates" are symmetrically provided, which plates being bent parallelwise and opposedly with regard to each other so as to form hinge lobes, thereinafter also referred to as "hinge pieces"; a temple having a reciprocally such hinge lobe, thereinafter also referred to as "rotatable piece" which is insertable between said knuckle plates and a pair of lenses, on a portion thereof to which the lens strap of said bridge extends, a holding hole being opened while on a portion thereof to which said lens strap of said bracket endpiece extends, a holding hole being opened, wherein a front frame is provided by abutting the lens straps of the bridge onto the adjacent holding holes of the juxtaposed lenses so as to clamp said bridge onto the lenses with holding members while by abutting the lens strap of the respective bracket endpieces onto the holding hole located in the outer circumferential fringe side of the respective lenses so as to clamp the respective endpieces onto the lenses with a holding member and each of the temples is foldably engaged to each of the endpieces by inserting its rotatable piece between said knuckle plates and axially connecting said piece and plates with a holding means.

The bent metallic parts required for realizing rimless spectacles embodied in the present invention are provided by adopting the following structural features thereof, which features are also shown in the accompanying drawings.

The bridge is made of a blanked metallic thin plate which has a bar portion of small width and is flexible to be bent, and characterized in that it is integrally provided with at least one lens strap at the respective ends of said bar portion and a pair of pad arms respectively extending below from the respective ends of said bar portion and having a pad mounting portion at their tip ends.

The bracket endpiece is made of a blanked metallic thin plate which has a bracket portion of small width and is flexible to be bent, and characterized in that it is provided with at least one lens strap at one end of said bracket portion while at the other end thereof a pair of knuckle plates are arranged in symmetrical relation to each other, which plates are bent parallelwise and opposedly with regard to each other so as to form hinge pieces.

The rimless spectacles embodied in the present invention and the metallic parts used therefor are supplimentarily explained as follows. For the bridge and bracket endpiece, it is preferable to use a thin metallic plate of high anti-corrosion and flexibility. For examples, this plate is made of β-titanium, Ti-Pd alloy, Cu-Ni-Zn alloy, Be-Cu alloy or stainless steel such as SUS 420J2-CSP of Japanese Industrial Standard.

The spectacle lens embodied in this invention adopts such plastic materials as diethyleneglycol bisallylcarbonate resin which is generally called as CR-39, polythionic urethane resin as published in the Japanese Patent Application Laid-open No.7-316250, metacrylate resin and polymethyl metacrylate resin. However, instead of such materials, a glass lens also will do, even though there may be some troubles to open the holding holes on the lens surface.

Next, it is preferable that a bent metallic part to form the bridge is integrally provided with rim pad portions to abut an inner circumferential fringe side of the lens in the vicinity of a root of the lens strap while that to form a bracket endpiece is integrally provided with rim pad portions to abut an outer circumferential fringe side thereof. This prevents the lenses from fluctuating at the holding holes when they are held in place only by the lens straps. Such bridge and endpiece as mentioned above are easy to be formed by blanking them out of a thin metallic plate.

It is preferable that the pad mounting portion of the pad arm is integrally formed when the bridge is blanked out of the thin metallic plate and the nose pad should be suspended or capped onto such portion.

### BRIEF DESCRIPTION OF THE DRAWINGS

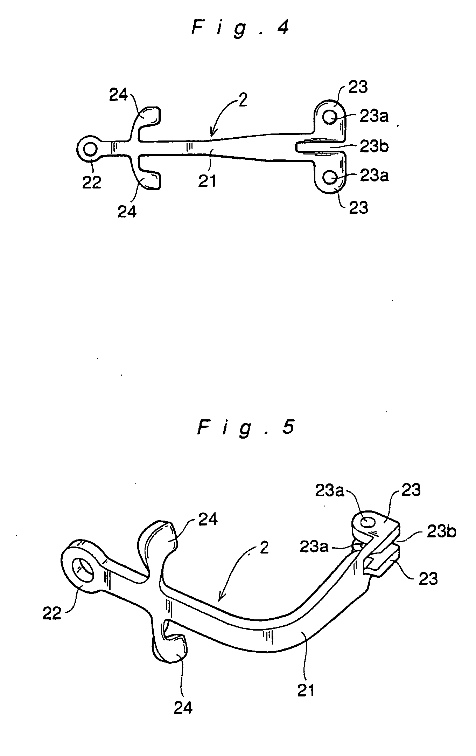

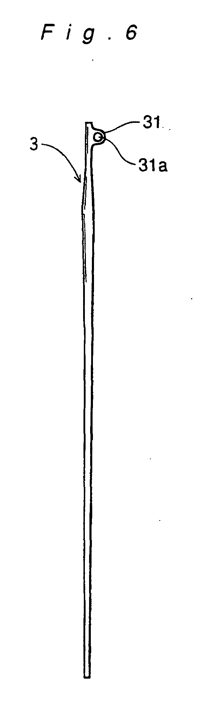

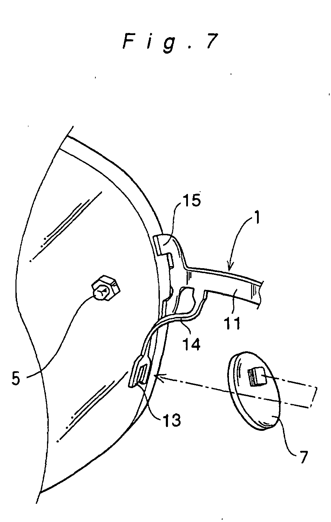

Figure 1 is a perspective view of the assembled rimless spectacles of the present invention; Figure 2 is a plan view of a blanked metallic plate to form the bridge of the rimless spectacles embodied in this invention; Figure 3 is a perspective view of the bridge formed by bending the respective structural members of the metallic plate as shown in Figure 2 at angles; Figure 4 is a plan view of a blanked metallic plate to form the bracket endpiece of the rimless spectacles of this invention; Figure 5 is a perspective view of the endpiece formed by bending the respective structural members of the metallic plate as shown in Figure 4 at angles; Figure 6 is a plan view of the temple of the rimless spectacles embodied in this invention and Figure 7 is an enlarged perspective view of the nose pad of the rimless spectacles of the present invention and its surrounding look as seen from the ocular side of the lens.

### BEST MODE FOR CARRYING OUT THE INVENTION

Hereinafter, the rimless spectacles structured according to this invention and its bent metallic parts are concretely described below.

Figure 1 shows the assembled rimless spectacles embodied in this invention, in which reference numerals (1), (2), (3), (4), (5), (6), (7) and (8) indicate a bridge, a bracket endpiece, a temple, a lens, a holding member (bolt and nut in this example), a holding means, a nose pad and an end cover respectively.

Figures 2 and 3 show the concrete shape of the bridge (1) of the rimless spectacles embodied in the present invention. That is to say, it is made of a thin β-titanium plate having 0.7 mm in thickness by blanking it out of the same so as to be formed into substantially π shape as a whole. On the respective sides of its bar portion (11), the respective lens straps (12) are formed extensibly from said sides. At the tip end of the respective straps, a retaining hole (12a) is opened. From the respective ends of the bar portion, a pad arm (14) extends below with a pad mounting portion (13) of horseshoe shape provided at its tip end. A nose pad as described below is suspended onto said mounting portion. In the present embodiment, a pair of rim pad portions (15) to be abutted onto inner fringe side surfaces of the lenses (4) are symmetrically disposed in the vicinity of a root of the respective lens straps with interposing the bar portion therebetween. To note, those rim pad portions are formed together with the bar portion, lens straps, retaining holes, pad mounting portions and pad arms when the bridge is blanked out of said β-titanium thin plate.

Figures 4 and 5 show the concrete shape of the bracket endpiece to be used for assembling the rimless spectacles embodied in this invention. This endpiece is also made of said β-titanium thin plate having 0.7 mm in thickness by performing blanking operation thereon. A lens strap (22) is formed on one end (extending towards the lens) of said bracket endpiece while on the other end thereof a pair of knuckle plates (23) and (23) are symmetrically formed with interposing the bracket portion therebetween. Those knuckle plates are formed into hinge pieces (23) and (23) by bending said plates parallelwise and opposedly with regard to each other with placing a gap therebetween along the axial center of the bracket portion, as shown in Figure 5. In the drawings, reference numeral (23a) indicates an aperture to receive a holding axial means as described below while reference numeral (23b) indicates a slit formed to adjust a gap between said knuckle plates when they are formed into hinge pieces. In this embodiment, a pair of rim pad portions are symmetrically provided at a root of the lens strap (22) with interposing the bracket portion therebetween, which portions are to be abutted onto the outer circumferential fringe side surfaces of the lens. This rim pad portion is also formed together with the bracket portion, lens straps (22), a pair of knuckle plates (23), apertures (23a) and slit (23b) when the bracket endpiece is blanked out of said β -titanium thin plate.

Figure 6 shows the concrete shape of the temple (3) to be used for assembling the rimless spectacles embodied in this invention. In this embodiment, it is also made of said titanium plate having 0.7 mm in thickness by performing blanking operation thereon. The temple as shown in the drawing is integrally provided with a reciprocally rotatable arcuate piece (31) on the side surface of the proximal end thereof, at the center of which an aperture (31a) to receive a holding axial means as described below is opened. On the other hand, on the distal end thereof, an end cover (8) is mounted as shown in Figure 1.

With a pair of lenses (4) to be used for assembling the rimless spectacles embodied in this invention, a plastic lens cast of diethyleneglycol bisallylcarbonate resin is cut into a shape as shown in Figure 1. A holding hole (41) is bored on a portion of the respective lenses to which the lens strap (12) extends while a holding hole (42) is bored on a portion thereof to which the lens strap (22) extends.

The rimless spectacles incorporating the above structural parts is assembled as follows. A front frame (F) is provided by coinciding the respective lens straps (12) of the bridge as bent into a shape as shown in Figure 3 with the respective holding holes (41) and clamping the respective lens straps with a holding member (5) such as a bolt and nut. With the bracket endpiece, hinge pieces (23) are formed by twisting the opposed roots of the slit (23b) so as to bend the upper and lower knuckle plates parallelwise and opposedly with regard to each other with placing a gap therebetween. The practically middle part of the bracket portion is bent to define an "L" shape. The bracket endpieces, on which such bending operation has been performed, are engaged to the lenses by coinciding the lens straps (22) with the holding holes (42) so as to connect them with a holding member (5) such as a bolt and nut. The temple (3) is foldably disposed to the ocular side of the front by inserting its reciprocally rotatable piece (31) between said hinge pieces (23) and connecting those pieces with a holding axial means (6) such as a rivet.

Upon the completion of the basic structure of the rimless spectacles as mentioned above, the rim pad portions (15) and (24) are twisted so that they abut onto the inner and outer circumferential fringe side surfaces of the respective lenses to hold them in place. Then, the pad arm (14) is twisted so that it suits a wearer's nose, onto the pad mounting portion (13) of which, the nose pad (7) is suspended as shown in Figure 7. Moreover, a twisted portion (31) is formed on the proximal end of the temple so that its upper and lower flat surfaces as originally blanked out are raised up, and onto the free end portion thereof, an end cover (8) is mounted. In such manner, the assembly of the rimless spectacles embodied in this invention is completed.

### (MODIFIED EXAMPLES)

The concrete example of the present invention is practically disclosed as described above, but it is not limited to the above embodiment. It should be understood that it can be modified in various manners within the scope of the accompanying claims.

For examples, the bar portion (11) at the respective ends thereof and the bracket endpiece at one end thereof have only one lens strap (12) and (22) respectively, so that the respective lenses are clamped at the holding holes (41) and (42) by the sole lens strap (12) of the bridge and that of the endpiece respectively. It may be well that the inner and outer fringe side surfaces of the respective lenses are each supported at two points as shown in Figure 1 of the Japanese Utility Model Application Laid-open No.62-35324 by forming the lens straps (12) and (22) respectively into forked shape. This dispenses with the rim pad portions to be abutted onto the inner and outer fringe side surfaces of the respective lenses, nonetheless, which still enables the lenses to be held in a stable manner. It is needless to say that such modified example belongs to the technical scope of the present invention.

In the above embodiment, the practically middle part of the bracket portion (21) is bent into an "L" shape so that the hinge pieces are extended towards the ocular side of the respective lenses, but it is not necessary to bend the same into such shape. It may be well that the bracket portion is made shorter so as to cause the hinge pieces to project from the respective sides of the front, onto which pieces the temple is hinged. This modification also belongs to the technical scope of the present invention.

Further, in the above embodiment, although it is shown that a joint plug of the nose pad is inserted into the enclosure of the pad mounting portion (13) of horseshoe shape so as to be suspended onto the latter, it may be well that it is suspended thereto with a nose pad made of silicone rubber capped thereon. This modification also belongs to the technical scope of the present invention.

Moreover, in the above embodiment, although it is shown that the temple is blanked out of a thin metallic plate, it is not necessary to use such metallic material therefor. It can be replaced with a conventionally and generally used temple, which replacement also belongs to the technical scope of the present invention.

### INDUSTRIAL APPLICABILITY

As having been described up to here with the forgoing embodiment, the rimless spectacles embodied in this invention is assembled with a bridge and bracket endpieces which are obtained by blanking them out of a thin metallic plate and on which bending operation is performed, so that it weighs light and is comfortable to wear in use while keeping its metallic strength and high-grade appearance intact. Moreover, the respective structural elements of such metallic parts as mentioned above are integrally provided, so that it dispenses with brazing or soldering, which improves productivity and reduces production cost.

The rimless spectacles embodied in the present invention incorporating the above bent metallic parts is so flexible and light in weight to wear that it gives no trouble to the wearers even though they may put it on for a long time.

According to the present invention, the problems encountered with the prior arts are completely solved, and practically and economically speaking, it surpasses over the conventional rimless spectacles, so that its industrial applicability is very high.

## Claims

1. Rimless spectacles with bent metallic parts comprising:
a bridge (1) made of a thin metallic plate and integrally provided with at least one first eyelet (12) at the respective ends of a bar portion (11) thereof and a pair of pad arms (14) respectively extending below from the vicinity of the respective ends of said bar portion, said pad arms respectively having a pad mounting portion (13) at their tip ends, wherein said first eyelet and pad arms are subjected to bending operation on a case-by-case basis;
a bracket endpiece (2) made of a thin metallic plate and provided with at least one second eyelet (22) at one end of a bracket portion (21) thereof while provided with a pair of lobes (23) at the other, end thereof in a symmetrical relation to each other, said lobes being bent parallelwise and opposedly with regard to each other so as to be formed into a pair of hinge lobes (23) and (23);
a temple (3) having a reciprocally rotatable third hinge lobe (31) which is insertable between said hinge lobes;
a pair of lenses (4), the respective lenses being provided with a holding hole (41) in a portion thereof to which the first eyelet (12) extends while provided with a holding hole (42) in a portion thereof to which the second eyelet (22) extends,
wherein a front frame (F) is provided by abutting the respective first eyelet (12) onto the respective holding holes (41) so as to clamp said bridge onto said pair of lenses with holding members (5) while by abutting the respective second eyelet (22) onto the respective holding holes (42) with the hinge lobes directed towards the ocular side of the respective lenses so as to clamp the respective bracket endpieces (2) onto the respective lenses with said holding members, and the respective temples (3) are foldably connected to the respective endpieces by inserting said third hinge lobe between said pair of hinge lobes and axially supporting those lobes with a holding means (6).

2. Rimless spectacles according to claim 1 wherein the first eyelet (12) in the vicinity of its root is integrally provided with rim pad portions (15) to be abutted onto an inner circumferential fringe side of the respective lenses while the second eyelet (22) in the vicinity of its root is integrally provided with rim pad portions (24) to be abutted onto an outer circumferential fringe side of the respective lenses.

3. Rimless spectacles according to claims 1 or 2 wherein said bridge, bracket endpiece and temple are respectively made by blanking them out of a thin metallic plate.

4. Rimless spectacles as in any one of the preceding claims wherein said bridge, bracket endpiece and temple are respectively made of a titanium thin plate.

5. Bent metallic part of a spectable frame, comprising a bridge having a bar portion (11) of small width thereon is made of a blanked metallic thin plate which is flexible to be bent, said bridge being integrally provided with at least one first eyelet (12) at the respective ends of said bar portion and a pair of pad arms (14) respectively having a pad mounting portion (13) at their tip ends, which arms extend below from the vicinity of the respective ends of said bar portion.

6. Bent metallic part according to claim 5 wherein the rim pad portions (15) to be abutted onto an inner circumferential fringe side surface of the respective lenses are integrally provided in the vicinity of the respective first eyelet (12).

7. Bent metallic part of a spectacle frame, comprising a bracket endpiece (2) having a bracket portion (21) of small width thereon is made of a blanked thin metallic plate which is flexible to be bent, said endpiece being integrally provided with at least one second eyelet (22) at one end of said bracket portion while at the other end thereof being provided with a pair of symmetrically positioned lobes (23), which lobes are bent parallelwise and opposedly with regard to each other so as to be formed into a pair of hinge lobes (23) and (23).

8. Bent metallic part according to claim 7 wherein rim pad portions (24) to be abutted onto an outer circumferential fringe side surface of the respective lenses are integrally provided in the vicinity of the second eyelet (22).

## Patentansprüche

1. Randlose Brille mit gebogenen Metallteilen, die folgendes umfaßt:
einen Steg (1), der aus einem dünnen Metallblech hergestellt wird und integriert mit wenigstens einer ersten Öse (12) an den entsprechenden Enden eines Stababschnitts (11) desselben und einem Paar von Pad-Armen (14) versehen ist, die jeweils aus der Nähe der entsprechenden Enden des Stababschnitts nach unten verlaufen, wobei die Pad-Arme jeweils an den äußeren Enden einen Pad-Befestigungsabschnitt (13) haben, bei dem die erste Öse und die Pad-Arme auf der Basis des Einzelfalls einem Biegevorgang unterzogen werden,
ein Gestell-Endstück (2), das aus einem dünnen Metallblech hergestellt wird und mit wenigstens einer zweiten Öse (22) an einem Ende eines Gestellabschnitts (21) desselben versehen ist, während es an dessen anderem Ende mit einem Paar von Nasen (23) in einem symmetrischen Verhältnis zueinander versehen ist, wobei die Nasen parallel und einander gegenüberliegend gebogen sind, um so ein Paar von Scharniernasen (23) und (23) zu bilden.
einen Bügel (3), der eine wechselweise drehbare dritte Scharniernase (31) hat, die zwischen die Scharniernasen eingefügt werden kann,
ein Paar Linsen (4), wobei die entsprechenden Linsen in einem Abschnitt derselben mit einem Hälteloch (41) versehen sind, zu dem hin die erste Öse (12) verläuft, während sie in einem Abschnitt derselben mit einem Halteloch (42) versehen sind, zu dem hin die zweite Öse (22) verläuft,
bei der ein vorderes Gestell (F) bereitgestellt wird durch Anstoßen der entsprechenden ersten Öse (12) an die entsprechenden Haltelöcher (41), so daß der Steg mit Halteelementen (5) auf das Paar Linsen geklemmt wird, während durch Anstoßen der entsprechenden zweiten Öse (22) an die entsprechenden Haltelöcher (42) die entsprechenden Bügelendstücke (2) mit den Halteelementen auf die entsprechenden Linsen geklemmt werden, wobei die Scharniernasen zur Okularseite der entsprechenden Linsen gerichtet sind, und die entsprechenden Bügel (3) faltbar mit den entsprechenden Endstücken verbunden werden, wozu die dritte Scharniernase zwischen das Paar von Scharniernasen eingeführt wird und diese Nasen durch ein Haltemittel (6) in Axialrichtung getragen werden.

2. Randlose Brille nach Anspruch 1, bei der die erste Öse (12) in der Nähe ihrer Wurzel integriert mit Rand-Pad-Abschnitten (15) versehen ist, um an eine innere Umfangseinfassungsseite der entsprechenden Linsen anzustoßen, während die zweite Öse (22) in der Nähe ihrer Wurzel integriert mit Rand-Pad-Abschnitten (24) versehen ist, um an eine äußere Umfangseinfassungsseite der entsprechenden Linsen anzustoßen.

3. Randlose Brille nach Anspruch 1 oder 2, bei welcher der Steg, das Gestell-Endstück und der Bügel jeweils durch Ausschneiden aus einem dünnen Metallblech hergestellt werden.

4. Randlose Brille nach einem der vorhergehenden Ansprüche, bei welcher der Steg, das Gestell-Endstück und der Bügel jeweils aus einem dünnen Titanblech hergestellt werden.

5. Gebogenes Metallteil eines Brillengestells, das einen Steg aufweist, der einen Stababschnitt (11) von geringer Breite hat, der aus einem ausgeschnittenen dünnen Metallblech hergestellt wird, das flexibel ist, um gebogen werden zu können, wobei der Steg integriert mit wenigstens einer ersten Öse (12) an den entsprechenden Enden des Stababschnitts und einem Paar von Pad-Armen (14) versehen ist, die jeweils einen Pad-Befestigungsabschnitt (13) an ihren äußeren Enden haben, wobei die Arme aus der Nähe der entsprechenden Enden des Stababschnitts nach unten verlaufen.

6. Gebogenes Metallteil nach Anspruch 5, bei dem die Rand-Pad-Abschnitte (15), die an die innere Umfangseinfassungsseitenfläche der entsprechenden Linsen anstoßen sollen, integriert in der Nähe der entsprechenden ersten Öse (12) bereitgestellt werden.

7. Gebogenes Metallteil eines Brillengestells, das ein Gestell-Endstück (2) aufweist, das einen Gestellabschnitt (21) von geringer Breite hat, der aus einem ausgeschnittenen dünnen Metallblech hergestellt wird, das flexibel ist, um gebogen werden zu können, wobei das Endstück integriert mit wenigstens einer zweiten Öse (22) an einem Ende des Gestellabschnitts versehen ist, während dessen anderes Ende mit einem Paar von symmetrisch positionierten Nasen (23) versehen ist, wobei die Nasen parallel und einander gegenüberliegend gebogen sind, um so ein Paar von Scharniernasen (23) und (23) zu bilden.

8. Gebogenes Metallteil nach Anspruch 7, bei dem die Rand-Pad-Abschnitte (24), die an eine äußere Umfangseinfassungsseitenfläche der entsprechenden Linsen anstoßen sollen, integriert in der Nähe der entsprechenden zweiten Öse (22) bereitgestellt werden.

## Revendications

1. Lunettes non cerclées comportant des éléments métalliques pliés, comprenant:
un pont (1) composé d'une fine plaque métallique et comportant au moins un premier oeillet (12) solidaire au niveau des extrémités respectives d'une partie de barre (11) et une paire de bras de coussinets (14) s'étendant respectivement au-dessous à partir du voisinage des extrémités respectives de ladite partie de barre, lesdits bras de coussinets comportant respectivement une partie de montage des coussinets (13) au niveau de leurs extrémités de pointe, ledit premier oeillet et les bras de coussinets étant soumis à une opération de pliage sur une base individuelle;
un tenon de support (2) composé d'une fine plaque métallique et comportant au moins un deuxième oeillet (22) au niveau d'une extrémité d'une partie de support (21) et comportant une paire de lobes (23) au niveau de l'autre extrémité, symétriques l'un à l'autre, lesdits lobes étant pliés de manière parallèle et opposée l'un à l'autre de sorte former une paire de lobes de charnière (23) et (23);
une branche (3) comportant un troisième lobe de charnière à rotation réciproque (31) pouvant être inséré entre lesdites lobes de charnière;
une paire de lentilles (4), les lentilles respectives comportant un trou de retenue (41) dans une partie correspondante, vers laquelle s'étend le premier oeillet (12) et comportant un trou de retenue (42) dans une partie correspondante vers laquelle s'étend le deuxième oeillet (22),
une monture frontale (F) produite par butée du premier oeillet respectif (12) contre les trous de retenue respectifs (41), de sorte à fixer ledit pont sur ladite paire de lentilles par des éléments de retenue (5) et par butée du deuxième oeillet respectif (22) contre les trous de retenue respectifs (42), les lobes de charnière étant dirigés vers le côté oculaire des lentilles respectives, de sorte à fixer les tenons de support respectifs (2) sur les lentilles respectives par lesdits moyens de retenue, les branches respectives (3) étant raccordées par pliage aux tenons respectifs par insertion dudit troisième lobe de charnière entre ladite paire de lobes de charnière et support axial de ces lobes par un moyen de retenue (6).

2. Lunettes non cerclées selon la revendication 1, dans lesquelles le premier oeillet (12) comporte au voisinage de sa base des parties de coussinets de bord solidaires (15) destinées à buter contre un côté de bordure circonférentiel interne des lentilles respectives, le deuxième oeillet (22) comportant au voisinage de sa base des parties de coussinets de bord solidaires (24) destinées à buter contre un côté de bordure circonférentiel externe des lentilles respectives.

3. Lunettes non cerclées selon la revendication 1 ou 2, dans lesquelles ledit pont, le tenon de support et la branche sont respectivement formés par découpage à partir d'une fine plaque métallique.

4. Lunettes non cerclées selon l'une quelconque des revendications précédentes dans lesquelles ledit pont, le tenon de support et la branche sont respectivement formés à partir d'une fine plaque de titane.

5. Elément métallique plié d'une monture de lunettes, comprenant un pont comportant une partie de barre (11) de largeur réduite, composée d'une fine plaque métallique découpée flexible au pliage, ledit pont comportant au moins un premier oeillet solidaire (12) au niveau des extrémités respectives de ladite partie de barre et une paire de bras de coussinets (4) comportant respectivement une partie de montage de coussinets (13) au niveau de leurs extrémités de pointe, ces bras s'étendant au-dessous à partir du voisinage des extrémités respectives de ladite partie de barre.

6. Elément métallique plié selon la revendication 5, dans lequel les parties de coussinets de bord (15) devant buter contre une surface latérale de bordure circonférentielle interne des lentilles respectives sont agencées d'une seule pièce au voisinage du premier oeillet respectif (12).

7. Elément métallique plié d'une monture de lunettes, comprenant un tenon de support (2) comportant une partie de support (21) de largeur réduite, produite à partir d'une fine plaque métallique découpée flexible à la flexion, ledit tenon comportant au moins un deuxième oeillet solidaire (22) au niveau d'une extrémité de ladite partie de support, et comportant au niveau d l'autre extrémité une paire de lobes à positionnement symétrique (23), ces lobes étant pliés de manière parallèle et opposée l'un à l'autre de sorte à former une paire de lobes de charnière (23) et (23).

8. Elément métallique plié selon la revendication 7, dans lequel les parties de coussinets de bord (24) devant buter contre une surface latérale de bordure circonférentielle externe des lentilles respectives sont agencées d'une seule pièce au voisinage du deuxième oeillet (22).
